# EUROPÄISCHE PATENTSCHRIFT

(11) **EP 3 450 239 B1**
(45) Veröffentlichungstag und Bekanntmachung des Hinweises auf die Patenterteilung: **11.03.2020**
(21) Anmeldenummer: 18188670.6
(22) Anmeldetag: 13.08.2018
(51) Int. Cl.: B60K 17/04

(54) **GETRIEBE, INSBESONDERE FÜR EINE EINZELRADANTRIEBSEINHEIT**
TRANSMISSION, IN PARTICULAR FOR A SINGLE WHEEL DRIVE UNIT
ENGRENAGE, EN PARTICULIER POUR UNE UNITÉ D'ENTRAÎNEMENT À ROUE INDÉPENDANTE

(30) Priorität: 12.09.2017 DE 102017216032; 18.04.2018 DE 102018205862; 30.08.2017 DE 102017215123
(43) Veröffentlichungstag der Anmeldung: 06.03.2019
(73) Patentinhaber: Robert Bosch GmbH, 70442 Stuttgart (DE)
(72) Erfinder: Meise, Andreas, 44799 Bochum (DE); Lamparski, Christof, 82293 Mittelstetten (DE); Schmeink, Markus, 44263 Dortmund (DE); Wegerhoff, Thomas, 44139 Dortmund (DE)
(74) Vertreter: Thürer, Andreas

(56) Entgegenhaltungen:
- EP-A2- 2 416 027
- EP-B1- 2 847 016
- DE-A1- 2 758 556
- DE-A1-102014 109 016
- DE-A1-102015 213 692

## Beschreibung

Die Erfindung betrifft ein Getriebe, das insbesondere innerhalb einer Einzelradantriebseinheit vorgesehen ist und das aufweist einen Getriebeträger, eine Eingangswelle, mindestens eine Planetengetriebestufe mit einem ersten außenverzahnten Sonnenrad, das über die Eingangswelle antreibbar ist, mit einem innenverzahnten Hohlrad, das auf dem Träger drehbar gelagert ist, und mit einem umlaufenden Planetensteg, an dem mindestens ein außenverzahntes, sowohl mit dem Sonnenrad als auch mit dem Hohlrad in Eingriff stehendes Planetenrad drehbar gelagert ist. Eine weitere Getriebestufe umfasst mindestens ein Stirnrad, das auf einem bezüglich des Getriebeträgers ortsfesten, mit seiner Achse im Abstand zur Achse der Eingangswelle angeordneten Lagerzapfen drehbar gelagert ist und mit dem Hohlrad in Zahneingriff steht, und ein zweites außenverzahntes Sonnenrad.

Derartige Getriebe werden vorwiegend innerhalb von Einzelradantrieben von mobilen Arbeitsmaschinen oder Transporteinheiten eingesetzt. In der Praxis werden solche Fahrzeuge oft auch geschleppt oder gezogen. Die mögliche Geschwindigkeit beim Schleppen soll möglichst hoch sein, wobei auch eine Höchstgeschwindigkeit, die höher als die aus dem Antrieb selbst resultierenden Fahrgeschwindigkeiten ist, gefordert wird.

Aus der EP 2 847 016 B1 ist schon ein Getriebe mit den oben angeführten Merkmalen bekannt. Das Getriebe umfasst eine einzige Planetengetriebestufe und eine weitere Getriebestufe. Es sind jedoch auch Getriebe bekannt, die neben der weiteren Getriebestufe mit Stirnrädern mit ortsfesten Achsen mehrere Planetengetriebestufen aufweisen. Beispielhaft sei dazu auf die DE 10 2014 109 016 A1 verwiesen. Bei dem Getriebe gemäß der EP 2 847 016 B1 kann die Eingangswelle, an deren einem Ende durch eine Außenverzahnung das Sonnenrad einer Planetengetriebestufe gebildet ist, als Ganzes axial verschoben werden, wobei in einer Endposition der Eingangswelle das Sonnenrad in Eingriff mit den Planetenrädern der Planetengetriebestufe steht und in der anderen Endposition der Eingangswelle das Sonnenrad außer Eingriff mit den Planetenrädern ist. Auf diese Weise gelingt es, die Eingangswelle und damit einen Antriebsmotor, der nicht auf die gewünschte hohe Schleppgeschwindigkeit ausgelegt ist, von dem den Ausgang des Getriebes bildenden Hohlrad abzukoppeln.

Bei dem bekannten Getriebe läuft während eines Schleppvorgangs der Planetensteg der Planetengetriebestufe mit einer Drehzahl um, die durch die Drehzahl des Hohlrads, durch die Übersetzung zwischen dem Hohlrad und dem Stirnrad beziehungsweise den Stirnrädern der weiteren Getriebestufe und durch die Übersetzung zwischen dem Stirnrad und dem zweiten Sonnenrad bestimmt ist. Zusätzlich drehen sich die Planetenräder um ihre eigenen Achsen mit einer Drehzahl, die sich aus der Drehzahl des Hohlrads, der Übersetzung zwischen dem Hohlrad und den Planetenrädern und aus der Drehzahl des Planetensteges ergibt. Da das Getriebe wenigstens teilweise mit Öl gefüllt ist, treten durch die Drehbewegungen der Getriebeteile Planschverluste auf, die aufgrund der hohen Drehzahlen während des Schleppens die Gefahr in sich bergen, dass das Getriebe überhitzt. Außerdem werden die Lager der Planetenräder der Planetengetriebestufe hohen Drehzahlen sowie Fliehkräften ausgesetzt, die zu Schädigungen der Lagerung führen können.

Daher ist es die Aufgabe der vorliegenden Erfindung ein Getriebe, das einen Getriebeträger, eine Eingangswelle, mindestens eine Planetengetriebestufe mit einem ersten außenverzahnten Sonnenrad, das über die Eingangswelle antreibbar ist, mit einem innenverzahnten Hohlrad, das auf dem Träger drehbar gelagert ist, und mit einem drehbar gelagerten Planetensteg, an dem mindestens ein außenverzahntes, sowohl mit dem Sonnenrad als auch mit dem Hohlrad in Eingriff stehendes Planetenrad drehbar gelagert ist, und eine weitere Getriebestufe aufweist, die mindestens ein Stirnrad umfasst, das auf einem bezüglich des Getriebeträgers ortsfesten, mit seiner Achse im Abstand zur Achse der Eingangswelle angeordneten Lagerzapfen drehbar gelagert ist und mit dem Hohlrad in Zahneingriff steht, und mit einem zweiten außenverzahnten Sonnenrad, so weiterzuentwickeln, dass die Planschverluste während des Schleppens einer Maschine verringert sind.

Die Aufgabe wird dadurch gelöst, dass bei einem Getriebe der angegebenen Art das zweite außenverzahnte Sonnenrad in Richtung der Achse der Eingangswelle zwischen einer ersten Position und einer zweiten Position axial verschiebbar ist und in der eine Kopplungsposition darstellenden, ersten Position sowohl mit dem mindestens einen Stirnrad als auch über eine Verzahnung mit dem Planetensteg in Eingriff steht und dass in der eine Entkopplungsposition darstellenden, zweiten axialen Position des zweiten Sonnenrads der Kraftfluss zwischen dem mindestens einen Stirnrad und dem Planetensteg unterbrochen ist.

Erfindungsgemäß kann also der Planetensteg der der weiteren Getriebestufe unmittelbar vorgelagerten Planetengetriebestufe von den Stirnrädern der weiteren Getriebestufe entkoppelt werden. Die Drehzahl des Planetensteges ist somit nicht mehr von den Übersetzungen der weiteren Getriebestufe abhängig. Der Planetensteg wird, wenn überhaupt, vielmehr mit einer Drehzahl umlaufen, die sich durch die Reibungskräfte in den Verzahnungen und durch die hydrodynamischen Kräfte des sich im Getriebe befindlichen Öls ergibt. Dabei sind die hydrodynamischen Kräfte dominant, so dass die Bewegung des Planetensteges mitsamt den Planetenrädern relativ zum Öl gering ist und geringe Planschverluste auftreten.

Vorteilhafte Ausgestaltungen eines erfindungsgemäßen Getriebes kann man den Unteransprüchen entnehmen.

Bevorzugt ist das zweite Sonnenrad in seiner Entkopplungsposition außer Zahneingriff mit dem Planetensteg. Die Länge der Verzahnung zwischen dem zweiten Sonnenrad und dem Planetensteg ist üblicherweise axial kürzer als die Verzahnung zwischen dem zweiten Sonnenrad und den Stirnrädern der weiteren Getriebestufe, so dass nur ein kurzer Verschiebeweg des zweiten Sonnenrades benötigt wird. Der Eingriff zwischen den Stirnrädern der weiteren Getriebestufe und dem zweiten Sonnenrad lässt zwar das zweite Sonnenrad nach seiner Entkoppelung vom Planetensteg noch umlaufen. Dies ist jedoch wegen des üblicherweise kleinen Durchmessers des zweiten Sonnenrades unkritisch.

Es ist von Vorteil, wenn der Planetensteg zumindest nach seiner Entkopplung vom zweiten Sonnenrad noch besonders gut radial geführt ist. Dazu besitzt in einer zweckmäßigen Weiterbildung der Erfindung das zweite Sonnenrad einen unverzahnten, zylindrischen Bereich, mit dem der Planetensteg zumindest in der Entkopplungsposition des zweiten Sonnenrads radial geführt ist, indem die Zahnköpfe des Planetensteges außen an dem zylindrischen Bereich entlanglaufen. Der Planetensteg kann jedoch auch allein durch mehrere mit dem ersten Sonnenrad kämmende Planetenräder, die am Planetensteg drehbar gelagert sind, radial geführt sein.

Es sind Ausführungen eines erfindungsgemäßen Getriebes denkbar, bei denen das zweite Sonnenrad mechanisch, zum Beispiel über einen oder mehrere Kniehebel, durch einen oder mehrere Elektromagnete oder durch einen oder mehrere elektrische Stellmotoren verschiebbar ist. Vorteilhafterweise umfasst ein erfindungsgemäßes Getriebe jedoch einen Fluidkolben, insbesondere ein Hydraulikkolben, mit dem das zweite Sonnenrad axial bewegbar ist. Üblicherweise weist eine Einzelradantriebseinheit einen Hydromotor auf, von dem die Eingangswelle des Getriebes antreibbar ist und der zusammen mit einer Hydropumpe in einem geschlossenen hydraulischen Kreislauf betrieben wird. Um den Hydraulikkolben zu betätigen, kann dann zum Beispiel von einer Speisepumpe des geschlossenen hydraulischen Kreislaufs gefördertes und regelmäßig unter einem Druck von etwa 30 bar stehendes Öl genutzt werden. Grundsätzlich ist als Fluidkolben auch ein Pneumatikkolben denkbar.

Der Fluidkolben kann doppeltwirkend ausgebildet sein und an zwei Druckräume angrenzen, wobei der Fluidkolben und das zweite Sonnenrad durch Zufuhr von Druckmittel in den einen Druckraum in die eine Richtung in die Kopplungsposition und durch Zufuhr von Druckmittel in den anderen Druckraum in die entgegengesetzte Richtung in die Entkopplungsposition bewegbar sind. Es ist vorteilhaft, wenn der Fluidkolben in den beiden axialen Positionen relativ zum Getriebeträger arretierbar, insbesondere verrastbar ist. Dann kann der zur Verschiebung mit Druck beaufschlagte Druckraum nach einer Verschiebung von Fluidkolben und zweitem Sonnenrad von Druck entlastet werden, ohne dass durch auftretende Erschütterungen die Positionen von Fluidkolben und zweitem Sonnenrad ungewollt verändert würden.

Eine einfache und sichere Verrastung wird dadurch erhalten, dass am Getriebeträger ein Rastkörper radial geführt und in Richtung nach radial innen von einer am Getriebeträger abgestützten Feder belastet ist, dass am Fluidkolben zwei axial beabstandete Vertiefungen vorhanden sind und dass der Rastkörper in den beiden axialen Positionen von Fluidkolben und zweitem Sonnenrad jeweils in eine der Vertiefungen eintaucht. Die beiden Vertiefungen sind vorteilhafterweise umlaufende Nuten, so dass eine Verrastung in jeder Drehlage des Fluidkolbens möglich ist.

Der Fluidkolben kann alternativ auch einfachwirkend ausgebildet sein und an einen Druckraum angrenzen, wobei der Fluidkolben und das zweite Sonnenrad durch Zufuhr von Druckmittel in den Druckraum in die eine Richtung in die eine axiale Position und durch eine Federanordnung in die entgegengesetzte Richtung in die andere axiale Position bewegbar sind.

Vorteilhafterweise sind der Fluidkolben und das zweite Sonnenrad durch eine Federanordnung in axiale Positionen bewegbar, in denen der Kraftfluss zwischen dem mindestens einen Stirnrad und dem Planetensteg unterbrochen ist. Dann findet bei einem Ausfall der Hydraulik automatisch eine Entkopplung statt.

Die Federanordnung umfasst bevorzugt mindestens eine Schraubendruckfeder, die sich direkt am Ringkolben und am Getriebeträger abstützt.

Eine sehr platzsparende Anordnung einer Schraubendruckfeder ergibt sich, wenn im Getriebeträger im Bereich eines Lagerzapfens eine Sackbohrung vorhanden ist, die bis in den Lagerzapfen hineinreicht, und wenn die Schraubendruckfeder in die Sackbohrung eintaucht. Vorzugsweise sind genauso viele Sackbohrungen wie Lagerzapfen vorhanden. Die Anzahl der in einer Sackbohrung befindlichen Schraubendruckfedern kann variieren.

Ein Druckraum, an den der Fluidkolben angrenzt, ist vorteilhafterweise zwischen dem Fluidkolben und dem Getriebeträger ausgebildet.

In einer besonders bevorzugten Weiterbildung eines erfindungsgemäßen Getriebes ist das zweite Sonnenrad axial fest mit dem Fluidkolben verbunden. Außerdem sind das zweite Sonnenrad und der Fluidkolben drehbar aneinander gelagert. Insbesondere dann, wenn keine andere Entkopplungsmöglichkeit innerhalb des Getriebes vorgesehen ist, sondern nur der Kraftfluss zwischen dem mindestens einen Stirnrad und dem Planetensteg unterbrechbar sein soll, ist zur Verschiebung des zweiten Sonnenrads der direkte Kraftfluss von einem Aktuator, wie zum Beispiel einem Fluidkolben oder einem Elektromagneten oder einem elektrischen Stellmotor oder einer Handhabe, zum zweiten Sonnenrad zweckmäßig.

In einer Weiterbildung eines erfindungsgemäßen Getriebes ist, wie an sich bekannt, zur Entkopplung der Planetenräder einer Planetengetriebestufe von einem Antrieb die Eingangswelle axial verschiebbar. Wird diese Entkopplung durch eine Verschiebung des mit der Eingangswelle drehfest verbundenen Sonnenrades erreicht, so kann nach einer Entkopplung das Sonnenrad sicher keinen Einfluss mehr auf die Bewegung des Planetensteges und der Planetenräder haben. Wird die Entkoppelung zwischen dem Sonnenrad und einem antriebsseitigen Eingang des Getriebes vorgenommen, so beeinflusst das Sonnenrad die Drehbewegungen des Planetensteges und der Planetenräder bei einer eventuellen Schwergängigkeit. Unter einer verschiebbaren Eingangswelle wird hier auch eine Eingangswelle verstanden, die aus mehreren Teilen aufgebaut ist, von denen zur Kopplung oder Entkoppelung nicht alle, sondern zum Beispiel nur ein einziges Teil axial bewegt wird.

Ist bei einem erfindungsgemäßen Getriebe zur Entkopplung der Planetenräder einer Planetengetriebestufe von einem Antrieb die Eingangswelle axial verschiebbar, so ist bevorzugt im Sinne einer kompakten, axial kurzen Bauweise das zweite Sonnenrad axial fest mit der Eingangswelle gekoppelt und über die axial verschiebbare Eingangswelle axial verschiebbar. Es genügt dann, wenn ein Betätigungselement, zum Beispiel ein Fluidkolben nur die Eingangswelle verschiebt. Ein direkter Angriff des Betätigungselements am zweiten Sonnenrad ist nicht notwendig

Die in axialer Richtung feste Verbindung zwischen dem zweiten Sonnenrad und dem axial verschiebbaren Teil der Eingangswelle beziehungsweise der als Ganzes verschiebbaren Eingangswelle kann man dadurch erhalten, dass das zweite Sonnenrad und die Eingangswelle über mindestens einen radial angeordneten Stift axial fest miteinander verbunden sind, wobei der mindestens eine Stift fest in dem einen Teil sitzt und in eine umlaufende Nut des anderen Teils eintaucht. Bevorzugt sind das zweite Sonnenrad und die Eingangswelle dadurch axial fest miteinander verbunden, dass das zweite Sonnenrad mit einer Stirnseite an einer als Anschlag für den Weg des Sonnenrades in die eine Richtung wirkenden, äußeren Schulter der Eingangswelle anliegt und dass an der Eingangswelle ein Sprengring angebracht ist, der als Anschlag für den Weg das zweite Sonnenrad in die entgegengesetzte Richtung wirkt.

Zur Verschiebung der Eingangswelle ist diese axial fest mit dem Fluidkolben verbunden. Damit sich der Fluidkolben nicht mit der Eingangswelle dreht, befindet sich zwischen der Eingangswelle und dem Fluidkolben ein Drehlager.

Bevorzugt ist die Eingangswelle mehrteilig ausgebildet und umfasst ein mit dem Sonnenrad einer Planetengetriebestufe fest verbundene Sonnenradwelle und einen Mitnehmer. Der Mitnehmer ist zwischen einer Kopplungsposition und einer Entkopplungsposition, axial verschiebbar. Der Mitnehmer und das zweite Sonnenrad sind axial fest miteinander verbunden. Der Kopplungsweg des Mitnehmers kann auf den zur Kopplung und Entkopplung des zweiten Sonnenrads notwendigen Weg abgestimmt werden. Die axiale Länge des Verzahnungseingriffs zwischen dem drehfest mit der Sonnenradwelle verbundenen Sonnenrad und den entsprechenden Planetenrädern spielt für den Verschiebeweg keine Rolle. Die Sonnenradwelle kann stabil gelagert sein.

Mehrere Ausführungsbeispiele eines erfindungsgemäßen Getriebes sind in den Zeichnungen dargestellt. Anhand der Figuren dieser Zeichnungen wird die Erfindung nun näher erläutert.

Es zeigen
- Figur 1: einen axialen Schnitt durch ein erstes Ausführungsbeispiel, bei dem das zweite Sonnenrad und ein Teil der mehrteilig ausgebildeten Eingangswelle nach beiden axialen Richtungen hydraulisch verschiebbar ist,
- Figur 2: einen axialen Schnitt durch ein zweites Ausführungsbeispiel, bei dem das zweite Sonnenrad und ein Teil der mehrteilig ausgebildeten Eingangswelle in die eine axiale Richtung hydraulisch und in die entgegengesetzte axiale Richtung durch Federkraft verschiebbar ist,
- Figur 3: einen axialen Schnitt durch ein drittes Ausführungsbeispiel, bei dem das zweite Sonnenrad und ein Teil der mehrteilig ausgebildeten Eingangswelle ebenfalls in die eine axiale Richtung hydraulisch und in die entgegengesetzte axiale Richtung durch Federkraft verschiebbar ist, jedoch die Wirkrichtungen der hydraulischen Kraft und der Federkraft gegenüber dem zweiten Ausführungsbeispiel vertauscht sind, und
- Figur 4: einen axialen Schnitt durch ein viertes Ausführungsbeispiel, bei dem nur das zweite Sonnenrad und nicht auch die Eingangswelle oder ein Teil der Eingangswelle axial verschiebbar ist.

Die Getriebe nach den Figuren umfassen einen Getriebeträger 5 mit einem Befestigungsflansch 6, mit dem der Getriebeträger an dem Fahrgestell eines Fahrzeugs befestigt werden kann. Der Getriebeträger 5 ist ein Hohlkörper, der außen und innen Wandabschnitte aufweist, die sich in ihren Durchmessern voneinander unterscheiden.

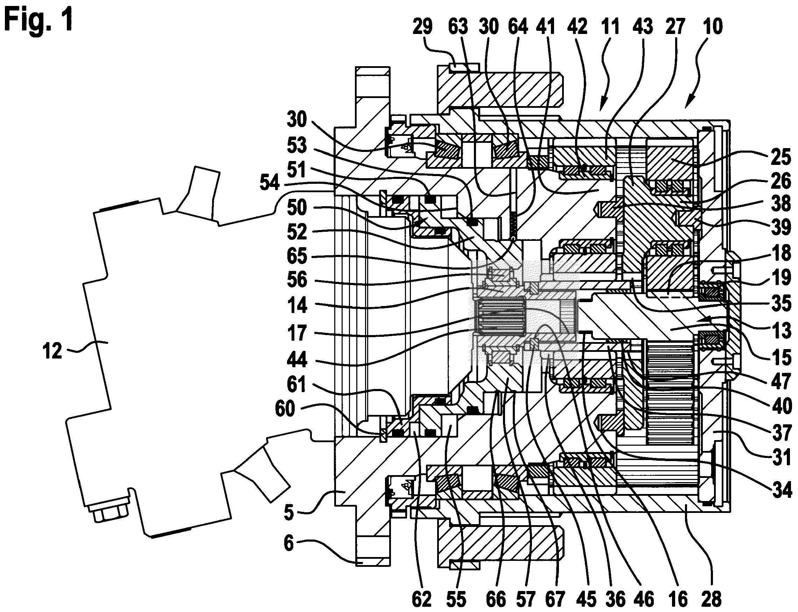

Die Getriebe umfassen weiterhin eine Planetengetriebestufe 10 und eine zweite Getriebestufe 11. Die Getriebestufen sind von einem Motor, vorliegend von einem Hydromotor 12 als Antrieb in Schrägachsenbauweise, der in den Figuren nur stark schematisiert dargestellt ist, über eine Eingangswelle 13 antreibbar. Diese ist aus zwei Teilen aufgebaut, nämlich aus einem hülsenförmigen Mitnehmerteil 14 und einem Sonnenradteil 15, das am einen Ende mit einer Außenverzahnung 16 über eine gewisse Strecke in eine Innenverzahnung 17 des Mitnehmerteils 14 eintauchen kann beziehungsweise eintaucht und an dem einstückig ein erstes Sonnenrad 18, das das Sonnenrad 18 der Planetengetriebestufe 10 darstellt, ausgebildet ist. Bei den Ausführungsbeispielen nach den Figuren 1 bis 3 ist das Sonnenradteil 15 von seinem mit der Außenverzahnung 16 versehenen Ende aus gesehen jenseits des ersten Sonnenrads 18 mit einem Wälzlager 19 drehbar gelagert.

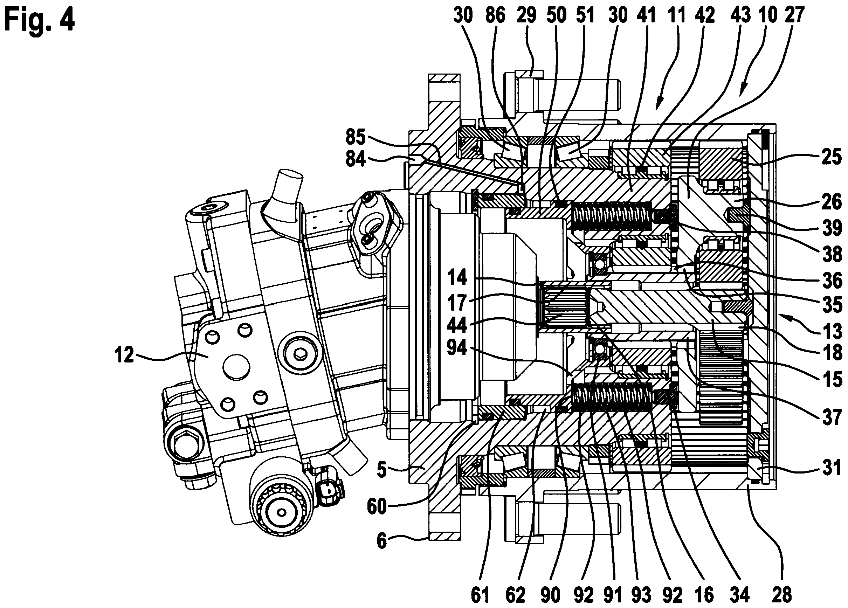

Das erste Sonnenrad 18 kämmt mit mehreren außenverzahnten Planetenrädern 25, die in gleichen Abständen zueinander über zweireihige Rollenlager drehbar auf Lagerzapfen 26 eines Planetensteges 27 gelagert sind. Die Planetenräder 25 kämmen außer mit dem ersten Sonnenrad 18 noch mit einem innenverzahnten Hohlrad 28, das einen Befestigungsflansch 29 aufweist, mit dem es an der Felge eines Rades befestigt werden kann. Das Hohlrad 28 bildet somit den radseitigen Ausgang des Getriebes. Es ist mit Hilfe zweier in O-Anordnung eingebauter Kegelrollenlager 30 außen auf dem Getriebeträger 5, der von einer Stirnseite des Hohlrades 28 aus in dieses hineinragt, drehbar gelagert. An der anderen Stirnseite ist in das Hohlrad 28 ein Deckel 31 eingesetzt, der bei den Ausführungsbeispielen nach den Figuren 1 bis 3 das Wälzlager 19 für die Eingangswelle 13 trägt und bei dem Ausführungsbeispiel nach Figur 4 einen in das Sonnenradteil 15 eingeschlagenen Kerbnagel und damit das Sonnenradteil 15 axial abstützt.

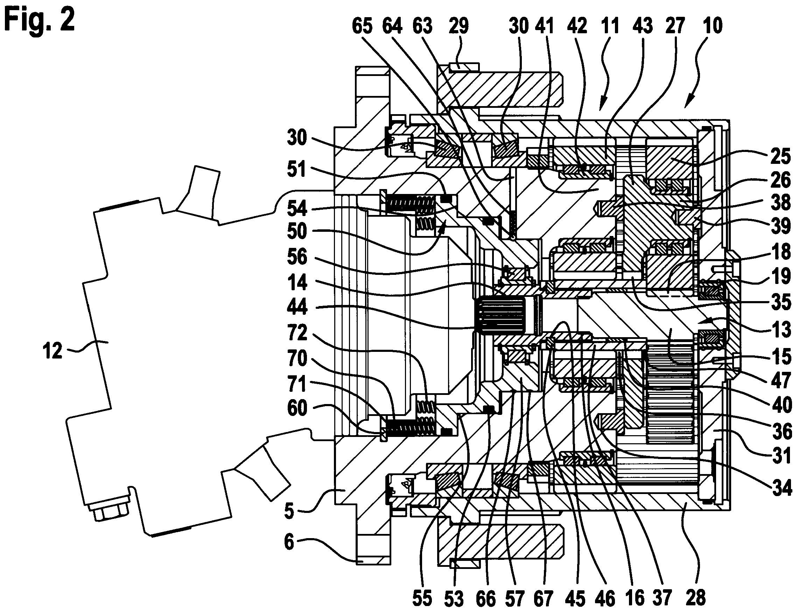

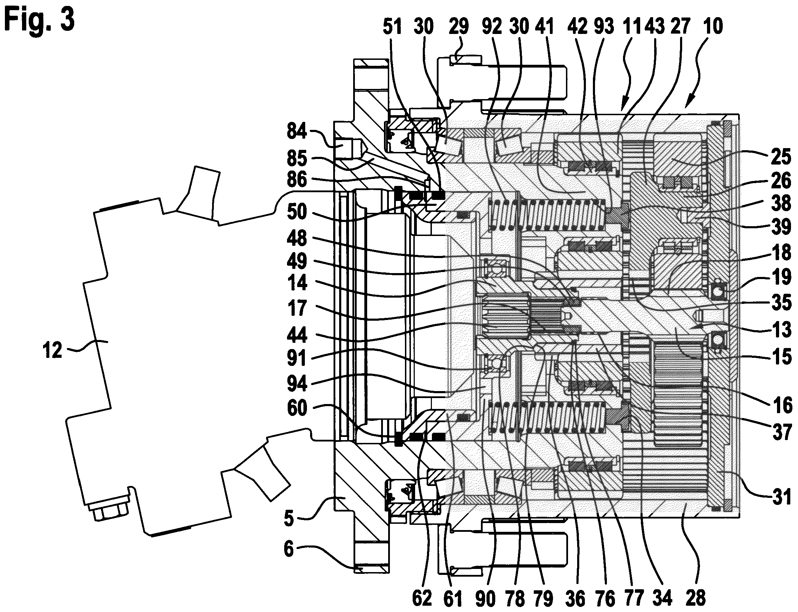

Der Planetensteg 27 ist mit einer Innenverzahnung 35 versehen, mit der er auf einem hülsenförmigen, mit einer Außenverzahnung 36 versehenen, zweiten Sonnenrad 37 stecken kann, und über Bundbolzen 38, die in Bohrungen 34 des Getriebeträgers 5 eingesetzt sind und sich an diesem abstützen, und über Bundbolzen 39, die sich am Deckel 31 abstützen axial und bei den beiden Ausführungsbeispielen nach den Figuren 1 und 2 über einen kreiszylindrischen, unverzahnten Endbereich 47 des zweiten Sonnenrads 37 radial geführt. Bei den Ausführungsbeispielen nach den Figur 3 und 4 ist auf diese zusätzliche Führung des Planetenstegs am zweiten Sonnenrad verzichtet. Der Planetensteg 27 ist dort allein durch die mehreren Planetenräder 25 und deren Kämmen mit dem ersten Sonnenrad 18 radial geführt. Das zweite Sonnenrad 37 ist koaxial zur Eingangswelle 13 angeordnet.

Zwischen dem zweiten Sonnenrad 37 und dem Sonnenradteil 15 der Eingangswelle 13 ist bei den beiden Ausführungsbeispielen nach den Figuren 1 und 2 ein zweites Wälzlager 40 für das Sonnenradteil 15 eingebaut. Bei dem Ausführungsbeispiel nach Figur 3 dagegen ist zwischen einem vom Mitnehmerteil 14 über die Innenverzahnung 17 drehfest mitgenommenen außenverzahnten Zwischenring 48 und einem Endzapfen des Sonnenradteils 15 ein Gleitlager 49 angeordnet.

An dem Getriebeträger 5 sind um die Eingangswelle 13 herum mit gleichen Winkelabständen zueinander mehrere axial ausgerichtete Lagerzapfen 41 ausgebildet, von denen jeder über eine zweireihige Wälzlageranordnung 42 ein außenverzahntes Stirnrad 43 lagert, das sowohl mit dem zweiten Sonnenrad 37 als auch mit dem Hohlrad 28 kämmt. Die Bohrungen 34 für die der axialen Führung des Planetenstegs 27 dienenden Bundbolzen 38 befinden sich in den Lagerzapfen 41. Bei den beiden Ausführungsbeispielen nach den Figuren 1 und 2 verlaufen die Bohrungen 34 in der Achse der Lagerzapfen 41, während sie bei den Ausführungsbeispielen nach den Figuren 3 und 4 nach innen zur Achse der Eingangswelle 13 hin versetzt sind und exzentrisch zu den Achsen der Lagerzapfen 41 verlaufen. Dies hat den Vorteil, dass der Planetensteg 27 über den gesamten Umlauf an der vollen ihm zugewandten Stirnfläche der Bundbolzen 38 anliegen kann.

Da die Lagerzapfen 41 bezüglich des Getriebeträgers 5 eine feste Lage einnehmen, weist die zweite Getriebestufe 11 keine umlaufenden Planetenräder auf. Wegen der im Vergleich zur Planetengetriebestufe 10 ähnlichen Anordnung der Zahnräder wird jedoch auch die zweite Getriebestufe oft als Planetengetriebestufe bezeichnet.

Bei den Ausführungsbeispielen nach den Figuren 1 bis 3 ist das Mitnehmerteil 14 der Eingangswelle 13 außer an dem dem Sonnenradteil 15 zugewandten Ende auch am anderen Ende mit einer Innenverzahnung versehen, mit der es drehfest mit einer Zahnwelle 44 des Hydromotors 12 verbunden ist. Das Mitnehmerteil 14 ist gegenüber der Zahnwelle 44 und gegenüber dem Sonnenradteil 15 der Eingangswelle 13 axial zwischen zwei Endpositionen verschiebbar, wobei es in der einen Endposition, nämlich in einer Entkopplungsposition, die in den Figuren 1 und 3 gezeigt ist, außer Dreheingriff mit dem Sonnenradteil 15, und in der anderen Endposition, nämlich der Kopplungsposition, die in Figur 2 gezeigt ist, in Eingriff mit dem Sonnenradteil 15 ist.

Das zweite Sonnenrad 37 und der Mitnehmerteil 14 der Eingangswelle 13 sind bei den Ausführungsbeispielen gemäß den Figuren 1 bis 3 axial überlappend angeordnet, wobei das Mitnehmerteil 14 in das zweite Sonnenrad 37 eintaucht. Bei den beiden Ausführungsbeispielen nach den Figuren 1 und 2 befinden sich in dem zweiten Sonnenrad 37 mehrere Radialbohrungen, in die Zylinderstifte 45 eingepresst sind. Diese ragen innen über die Innenwand des zweiten Sonnenrads 37 vor und greifen in eine umlaufende Nut 46 des Mitnehmerteils 14, deren axiale Erstreckung geringfügig größer als der Durchmesser der Zylinderstifte 45 ist.

Bei dem Ausführungsbeispiel nach Figur 3 ist das zweite Sonnenrad 37 innen mit einer Stufe versehen, an der eine ringförmige Anlagescheibe 76 anliegt. Diese liegt andererseits über einen in eine Nut des Mitnehmerteils 14 eingesetzten Sprengring 77 auch am Mitnehmerteil 14 an, so dass das zweite Sonnenrad 37 von dem Mitnehmerteil 14 in die eine axiale Richtung verschoben werden kann. Das zweite Sonnenrad 37 liegt außerdem mit einer Stirnseite 78 an einer Schulter 79 auf der Außenseite des Mitnehmerteils 14, so dass es von dem Mitnehmerteil 14 auch in die entgegengesetzte axiale Richtung verschoben werden kann

Somit sind bei den Ausführungsbeispielen gemäß den Figuren 1 bis 3 das Mitnehmerteil 14 und das zweite Sonnenrad 37 in axialer Richtung fest miteinander verbunden und das zweite Sonnenrad 37 kann zusammen mit dem Mitnehmerteil 14 axial verschoben werden, wobei es in einer ersten Endposition, nämlich der Kopplungsposition, mit dem Planetensteg 27 drehfest gekoppelt ist, und in der zweiten Endposition, nämlich der Entkopplungsposition vom Planetensteg 27 entkoppelt ist.

Zur gemeinsamen axialen Verschiebung von Mitnehmerteil 14 und zweitem Sonnenrad 37 in die eine Richtung dient bei allen gezeigten Ausführungsbeispielen ein als Ringkolben 50 ausgebildeter hydraulischer Fluidkolben, der in dem Getriebeträger 5 geführt ist. Ein Dichtring 51 dichtet den Radialspalt zwischen dem Ringkolben und dem Getriebeträger 5 ab.

Der Ringkolben 50 weist bei den beiden Ausführungsbeispielen nach den Figuren 1 und 2 einen kolbenstangenartigen, hohlen Abschnitt 52 auf, der in seinem Außendurchmesser kleiner als der eigentliche Ringkolben 50 ist und der sich vom Ringkolben 50 weg in Richtung auf die Zahnräder des Getriebes zu erstreckt. Ein weiterer Dichtring 53 dichtet den Radialspalt zwischen dem Abschnitt 52 des Ringkolbens 50 und einem gegenüber dem Abschnitt, der den Ringkolben 50 aufnimmt, im Innendurchmesser kleineren Abschnitt des Getriebeträgers 5 ab. Somit besteht bei den Ausführungsbeispielen nach den Figuren 1 und 2 zwischen dem Ringkolben 50 und einer Innenschulter 54 des Getriebeträgers 5 ein abgedichteter Druckraum 55, dem über nicht näher dargestellte Bohrungen im Getriebeträger 5 Hydrauliköl zugeführt und aus dem Hydrauliköl abgelassen werden kann.

Das Mitnehmerteil 14 der Eingangswelle 13 ist bei den Ausführungsbeispielen gemäß den Figuren 1 und 2 mit dem Ringkolben 50 axial fest über ein Rollenlager 56 verbunden, das einen zur axialen Führung der Rollen mit Borden versehenen Innenring hat, der durch Sprengringe in einer festen axialen Position zum Mitnehmerteil 14 gehalten ist. Die Rollen laufen direkt in einem weiteren axialen Abschnitt 57 des Ringkolbens 50, wobei der Außendurchmesser und der Innendurchmesser des Abschnitts 57 jeweils kleiner als die entsprechenden Durchmesser des Abschnitts 52 sind und wobei die Rollen aufgrund von in den Abschnitt 57 eingesetzten Sprengringen eine axial feste Position bezüglich des Ringkolbens 50 einnehmen. Somit wird eine axiale Verschiebung des Ringkolbens 50 über dessen Abschnitte 52 und 57 sowie über das Rollenlager 56 auf das Mitnehmerteil 14 der Eingangswelle 13 und auf das zweite Sonnenrad 37 übertragen.

Im normalen Betrieb soll ein Rad durch den Hydromotor 12 angetrieben werden. Der Ringkolben 50, das Mitnehmerteil 14 der Eingangswelle 13 und das zweite Sonnenrad 37 nehmen dann die in Figur 2 gezeigten axialen Positionen ein, in denen der Ringkolben 50 an der Innenschulter 54 des Getriebeträgers 5 anliegt und das Mitnehmerteil 14 und das Sonnenradteil 15 der Eingangswelle 13 sowie das zweite Sonnenrad 37 und der Planetensteg 27 in Drehrichtung formschlüssig miteinander gekoppelt sind.

Soll das Fahrzeug dagegen geschleppt oder geschoben werden, so wird dem Druckraum 55 Hydrauliköl zugeführt, so dass sich der Ringkolben 50 von der Innenschulter 54 des Getriebeträgers 5 bis zu einem Anschlag wegbewegt und das Mitnehmerteil 14 und das zweite Sonnenrad 37 mitnimmt, so dass zum einen das Sonnenradteil 15 und das Mitnehmerteil 14 und das zweite Sonnenrad 37 und der Planetensteg 27 voneinander entkoppelt sind, wie dies in Figur 1 gezeigt ist. Somit werden nicht nur die Getriebestufen 10 und 11 vom Antrieb abgekoppelt, sondern es wird auch der Planetensteg 27 vom zweiten Sonnenrad 37 entkoppelt. Die Drehzahlen des Planetensteges 27, der Planetenräder 25 und des ersten Sonnenrads 18 sind somit nicht mehr von der Abtriebsdrehzahl des Getriebes abhängig. Der Planetensteg 27 wird vielmehr mit einer Drehzahl umlaufen, die sich durch Reibungskräfte in der Verzahnung und durch hydrodynamische Kräfte des sich im Getriebe befindlichen Öls ergibt. Dabei sind die hydrodynamischen Kräfte dominant und die Relativbewegung der Baugruppe Planetensteg 27 zum Öl wird gering. In Folge werden auch die Planschverluste gering.

Im Hinblick auf die Einkopplung von Mitnehmerteil 14 und Sonnenradteil 15 einerseits und von zweitem Sonnenrad 37 und Planetensteg 27 andererseits sind die beiden Ausführungsbeispiele nach den Figuren 1 und 2 unterschiedlich gestaltet. Bei dem Ausführungsbeispiel nach Figur 1 ist am Ringkolben 50 dem Druckraum 55 gegenüberliegend mit Hilfe eines in den Getriebeträger 5 eingesetzten und durch einen Sprengring 60 gesicherten ringförmigen Bodens 61 ein zweiter Druckraum 62 ausgebildet. Die Radialspalte zwischen dem Boden 61 und dem Getriebeträger 5 sowie zwischen dem Boden 61 und dem Ringkolben 50 sind durch Dichtringe abgedichtet. Der Boden 61 bildet einen Anschlag für den Ringkolben 50. Um den Ringkolben 50 von der in Figur 1 gezeigten Position im Sinne einer Einkopplung der Teile zu verschieben, wird der Druckraum 55 zu einer Drucksenke hin geöffnet und dem Druckraum 62 wird Hydrauliköl zugeführt, bis der Ringkolben 50 wieder an der Innenschulter 54 des Getriebeträgers 5 anschlägt. Zur Verschiebung des Ringkolbens 50 in die entgegengesetzte Richtung ist der Druckraum 62 mit der Drucksenke verbunden, so dass Hydrauliköl aus dem Druckraum 62 verdrängt werden kann.

Um den Ringkolben 50 in seinen beiden Endpositionen auch bei fehlender Druckbeaufschlagung im entsprechenden Druckraum 55 oder 62 zu sichern, wird der Ringkolben 50 in den Endpositionen verrastet. Dazu ist der Getriebeträger 5 mit einer Radialbohrung 63 versehen, in die als Rastkörper eine durch eine am Getriebeträger 5 abgestützte Feder 64 belastete Kugel 65 eingesetzt ist. Der Abschnitt 57 des Ringkolbens 50 ist außen mit zwei axial voneinander beabstandeten Ringnuten 66 und 67 versehen. Die Kugel 65 wird in der einen Endposition des Ringkolbens 50 in die eine Ringnut 66 und in der anderen Endposition des Ringkolbens 50 in die andere Ringnut 67 eingedrückt, so dass der Ringkolben 50 jeweils verrastet ist. Werden die Druckräume 55 und 62 nach einer Verschiebung des zweiten Sonnenrads 37 abgesperrt, so kann unter Umständen auf die Verrastung verzichtet werden.

Bei dem Ausführungsbeispiel nach Figur 2 wird der Ringkolben 50 in eine Richtung, die zu einer Einkopplung der Teile führt nicht hydraulisch, sondern durch Federkraft verschoben. Dazu ist in den Getriebeträger 5 ein Kunststoffring 70 eingesetzt, der wie bei dem Ausführungsbeispiel nach Figur 1 der Boden 61 durch einen Sprengring 60 axial gesichert ist. Der Kunststoffring 70 hat auf seinem Umfang gleichmäßige verteilte durchgehende Axialbohrungen 71. In jede Axialbohrung 71 ist eine Schraubendruckfeder 72 eingesetzt, die sich einerseits am Ringkolben 50 und andererseits an dem Sprengring 60 abstützt. Ausgehend von der in Figur 2 gezeigten Position des Ringkolbens 50 werden also die Schraubendruckfedern 72 zusammengedrückt und gespannt, wenn dem Druckraum 55 Hydrauliköl zugeführt und dadurch der Ringkolben 50 von der Innenschulter 54 des Getriebeträgers 5 wegbewegt wird, bis er an dem Kunststoffring 70 anschlägt, und die Teile 14 und 15 sowie 27 und 37 ausgekoppelt werden. Wird der Druckraum 55 dann zu einer Drucksenke hin geöffnet, so können die Schraubendruckfedern 72 den Ringkolben 50 wieder in die in Figur 2 gezeigte Position verschieben, so dass die Teile 14 und 15 und die Teile 27 und 37 wieder einkoppeln.

Auch bei dem Ausführungsbeispiel nach Figur 2 kann es günstig sein, den Ringkolben 50 in seinen beiden Endpositionen zu verrasten. Es sind dazu wie bei dem Ausführungsbeispiel nach Figur 1 eine Radialbohrung 63 im Getriebeträger 5, eine Feder 64, eine Kugel 65 und Ringnuten 66 und 67 im Ringkolben 50 vorgesehen.

Bei dem Ausführungsbeispiel nach Figur 3 wird der Ringkolben 50 wie bei dem Ausführungsbeispiel nach Figur 2 in eine Richtung hydraulisch und in die andere Richtung durch Federkraft verschoben. Gegenüber dem Ausführungsbeispiel nach Figur 2 sind jedoch die Richtung, in der die hydraulische Kraft wirkt, und die Richtung, in der die Federkraft wirkt, miteinander vertauscht. Zweites Sonnenrad 37 und Planetensteg 27 werden also durch Federkraft voneinander entkoppelt und durch eine hydraulische Kraft miteinander gekoppelt. Dazu ist zunächst wie bei dem Ausführungsbeispiel nach Figur 1 zwischen dem Ringkolben 50 und einem in den Getriebeträger 5 eingesetzten und durch einen Sprengring 60 gesicherten Boden 61 ein Druckraum 62 gebildet. Dieser ist über eine Anschlussbohrung 84, eine Schrägbohrung 85 und einen runden Frässchlitz 86 fluidisch mit einer Hydraulikdruckquelle und mit einer Drucksenke verbindbar. Ähnliche Mittel zum Verbinden der Druckräume mit einer Druckquelle und einer Drucksenke sind auch bei den Ausführungsbeispielen nach den Figuren 1 und 2 vorhanden, dort jedoch nicht näher gezeigt. Der Ringkolben 50 des Ausführungsbeispiels nach Figur 3 ist außen nicht gestuft und weist einen den gleichen Außendurchmesser wie der eigentliche Ringkolben 50 besitzenden Boden 90 auf. In diesen und in das Mitnehmerteil 14 ist jeweils axial fest ein Kugellager 91 eingesetzt ist, das genauso wie das Rollenlager 56 aus den Ausführungsbeispielen nach den Figuren 1 und 2 ein Drehlager zwischen dem Ringkolben 50 und dem Mitnehmerteil 14 der Eingangswelle 13 bildet. An der bezüglich des eigentlichen Ringkolbens 50 außen gelegenen Seite des Bodens 90 wird der Ringkolben 50 von Schraubendruckfedern 92 beaufschlagt. Jeweils eine Schraubdruckfeder 92 taucht in eine Sackbohrung 93 ein, die sich bis in einen Lagerzapfen 41 hineinerstreckt, und stützt sich am Boden der Sackbohrung ab. Die Anzahl der Sackbohrungen 93 und somit auch die Anzahl der Schraubendruckfedern 92 ist gleich der Anzahl der Lagerzapfen 41. Die Achse einer Sackbohrung 93 fluchtet jeweils mit einer gegenüber der Sackbohrung 93 einen kleineren Durchmesser aufweisenden Bohrung 34, wobei die Bohrung 34 zu der entsprechenden Sackbohrung 93 offen ist. Auf diese Weise lassen sich die zwei Bohrungen 34 und 93 auf einfache Weise herstellen.

In Figur 3 ist das dritte Ausführungsbeispiel in einem Zustand gezeigt, in dem das zweite Sonnenrad 37 und der Planetensteg 27 sowie das Sonnenradteil 15 und das Mitnehmerteil 14 der Eingangswelle voneinander entkoppelt sind. Das zweite Sonnenrad 37 kann somit nicht den Planetensteg 27 und das Sonnenradteil 15 nicht das Mitnehmerteil 14 in Drehrichtung mitnehmen. Der Druckraum 62 ist von Druck entlastet. Die Schraubendruckfedern 93 haben den Ringkolben 50 zusammen mit dem Mitnehmerteil 14 und dem zweiten Sonnenrad in eine Position verschoben, in der der Ringkolben 50 an dem Boden 61 anliegt. Sollen nun zweites Sonnenrad 37 und Planetensteg 27 sowie Mitnehmerteil 14 und Sonnenradteil 15 in Drehrichtung miteinander gekoppelt werden, so wird dem Druckraum 62 Hydraulikfluid zugeführt und dadurch der Ringkolben 50 unter Vergrößerung des Druckraums 62 entgegen den Kräften der Schraubendruckfedern 93 verschoben, bis er axial am Getriebeträger 5 anschlägt. Dadurch geraten die Außenverzahnung 36 des zweiten Sonnenrads 37 mit der Innerverzahnung 35 des Planetenstegs 27 und die Innerverzahnung 17 des Mitnehmerteils 14 mit der Außenverzahnung 16 des Sonnenradteils 15 miteinander in Eingriff, so dass einerseits zweites Sonnenrad 37 und Planetenträger 27 und andererseits Mitnehmerteil 14 und Sonnenradteil 15 der Eingangswelle 13 in Drehrichtung miteinander gekoppelt sind.

In dem Druckraum 62 wird solange ein eine die Federkräfte überwiegende Druckkraft erzeugender Druck aufrechterhalten, solange die Einkopplung der Teile erhalten werden soll. Wird der Druckraum 62 dagegen mit einem Volumen, zum Beispiel einem Tank verbunden, in dem nur ein niedriger Druck oder Atmosphärendruck herrscht, so können die Schraubendruckfedern 93 den Ringkolben 50, das Mitnehmerteil 14 und das zweite Sonnenrad 37 wieder in die in der Figur 3 gezeigten Positionen verschieben.

Im Unterschied zu den Ausführungsbeispielen nach den Figuren 1 bis 3, bei denen einerseits das zweite Sonnenrad 37 und der Planetensteg 27 und andererseits das Mitnehmerteil 14 und das Sonnenradteil 15 der Eingangswelle 13 voneinander entkoppelbar sind, sind bei dem Ausführungsbeispiel nach Figur 4 nur das zweite Sonnenrad 37 und der Planetensteg 27 voneinander entkoppelbar. Das Mitnehmerteil 14 und das Sonnenradteil 15 sind bei dem Ausführungsbeispiel nach Figur 4 fest miteinander verbunden und drehen immer gemeinsam.

Entsprechend dem Unterschied ist bei dem Ausführungsbeispiel nach Figur 4 nur das zweite Sonnenrad 37 und nicht auch das Mitnehmerteil 14 zwischen einer Kopplungsposition und einer Entkopplungsposition axial verschiebbar. Als Mittel zur axialen Verschiebung des zweiten Sonnenrads 37 dient wie bei an den Ausführungsbeispielen nach den Figuren 1 bis 3 ein als Ringkolben 50 ausgestalteter hydraulischer Fluidkolben, der wie bei den Ausführungsbeispielen nach den Figuren 2 und 3 einfachwirkend ausgebildet ist und in die eine Richtung durch Zufuhr von Hydrauliköl in einen Druckraum 62 und in die entgegengesetzte Richtung durch eine Federanordnung verschiebbar ist. Die Richtung der hydraulischen Kraft und die Richtung der Federkraft sind die gleichen wie bei dem Ausführungsbeispiel nach Figur 3. Wie dort werden also das zweite Sonnenrad 37 und der Planetensteg 27 durch die Federkraft voneinander entkoppelt und durch die hydraulische Kraft miteinander gekoppelt.

Der Druckraum 62 ist wie bei den beiden Ausführungsbeispielen nach den Figuren 1 und 3 zwischen dem Ringkolben 50 und einem in den Getriebeträger 5 eingesetzten und durch einen Sprengring 60 gesicherten Boden 61 gebildet und wie in Figur 3 über eine Anschlussbohrung 84, eine Schrägbohrung 85 und einen Frässchlitz 86, der im Bereich des Bodens 61 angeordnet ist, fluidisch mit einer Hydraulikdruckquelle und mit einer Drucksenke verbindbar. Anders als bei den Ausführungsbeispielen nach den Figuren 1 und 3 ist der Boden 61 des Ausführungsbeispiels nach Figur 4 ein einfacher Ring. Durch entsprechende Gestaltung der Außenkontur des Bodens 61 ist die fluidische Verbindung zwischen dem Frässchlitz 86 und dem Druckraum 62 gewährleistet. Der Radialspalt zwischen dem Boden 61 und dem Getriebeträger 5 ist durch einen Dichtring abgedichtet. Anders als bei dem Ausführungsbeispiel nach Figur 3 ist der Ringkolben 50 außen abgesetzt und hat einen Abschnitt größeren Außendurchmessers, an dem er mit einem Dichtring 51 gegenüber dem Getriebeträger 5 abgedichtet ist, und einen Abschnitt kleineren Außendurchmessers, mit dem er innen in den Boden 61 eintaucht. Der Spalt zwischen dem Abschnitt kleineren Außendurchmessers und dem Boden 61 ist durch einen weiteren Dichtring abgedichtet. Der größere Außendurchmesser ist kleiner als der Außendurchmesser des Bodens 61. In Verbindung mit der Anordnung des Frässchlitzes 86 im Bereich des Bodens 61 hat dies den Vorteil, dass der Dichtring 51 beim Einsetzen des Ringkolbens 50 in den Getriebeträger 5 nicht über den Frässchlitz geschoben werden muss und so keine Gefahr einer Beschädigung des Dichtrings bei der Montage besteht.

Anstelle zwischen dem Ringkolben 50 und dem Mitnehmerteil 14 wie bei dem Ausführungsbeispiel nach Figur 3 ist bei dem Ausführungsbeispiel nach Figur 4 ein Kugellager 91 mit seinem Außenring axial fest in den Boden 90 des Ringkolbens 50 und mit seinem Innenring axial fest in das zweite Sonnenrad 37 eingesetzt. Somit sind der Ringkolben 50 und das zweite Sonnenrad 37 einerseits axial fest miteinander verbunden, während andererseits der Ringkolben 50 bei Drehung des zweiten Sonnenrads 37 stillstehen kann.

Die axiale Länge des zweiten Sonnenrads 37 des Ausführungsbeispiels nach Figur 4 ist größer als diejenige der zweiten Sonnenräder 37 aus den Figur 1 bis 3. Und zwar ist die Länge so gewählt, dass im eingekuppelten Zustand zwischen zweitem Sonnenrad 37 und Planetensteg 27 das zweite Sonnenrad 37 über die dem Planetensteg 27 abgewandten Seite der Stirnräder 43 soweit vorsteht, dass in dem vorstehenden Abschnitt das Kugellager 91 aufgenommen werden kann. Das zweite Sonnenrad 37 greift wegen dieses vorstehenden Abschnitts auch bei dem Ausführungsbeispiel nach Figur 4 über das Mitnehmerteil 14. Um andererseits die axiale Länge des zweiten Sonnenrads 37 auf ein Mindestmaß zu beschränken, ist bei dem Ausführungsbeispiel nach Figur 4 der Boden 90 des Ringkolbens 50 gekröpft, so dass sich ein zentraler zylindrischer Abschnitt zur Aufnahme des Kugellagers 91 in der in Figur 4 gezeigten Position, die dem gekuppelten Zustand von zweitem Sonnenrad 37 und Planetensteg 27 entspricht, unmittelbar vor den Stirnrädern 43 befindet. Das zweite Sonnenrad 37 steht dann in seiner in Figur 4 gezeigten Kopplungsposition gerade so viel über die Stirnräder 43 vor, wie es zur Aufnahme des Kugellagers 91 notwendig ist.

Die Federn der Federanordnung, durch die der Ringkolben 50 in die eine Richtung mit einer Kraft beaufschlagt wird, befinden sich wie bei dem Ausführungsbeispiel nach Figur 3 auch bei dem Ausführungsbeispiel nach Figur 4 in Sackbohrungen 93, von denen sich jeweils eine in einen Lagerzapfen 41 hineinerstreckt. Die Anzahl der Sackbohrungen 93 ist wiederum gleich der Anzahl der Lagerzapfen. Anders als bei dem Ausführungsbeispiel nach Figur 3 befindet sich in einer Sackbohrung 93 nicht nur eine Schraubendruckfeder 92. Vielmehr sind in jede Sackbohrung 93 zwei koaxial zueinander angeordnete Schraubendruckfedern 92 aufgenommen, so dass die Federanordnung gemäß Figur 4 auf den Ringkolben 50 eine größere Kraft ausübt als die Federanordnung gemäß Figur 3.

Bei den beiden Ausführungsbeispielen nach den Figuren 3 und 4 sind Durchbrüche 94 ersichtlich, die sich in dem Boden 90 des Ringkolbens 50 befinden. Durch die Durchbrüche 94 hindurch ist ein ungehinderter Austausch von Luft und Öl zwischen den Innenraumabschnitten auf den beiden Seiten des Ringkolbens 50 als möglich.

In Figur 4 ist das vierte Ausführungsbeispiel in einem Zustand gezeigt, in dem das zweite Sonnenrad 37 seine erste Position einnimmt. Zweites Sonnenrad 37 und Planetensteg 27 sind also miteinander gekoppelt. Der Ringkolben 50 ist durch Zufuhr von Druckmittel in den Druckraum 62 gegen die Kraft der Schraubendruckfedern 93 und gegen Reibkräfte bis zum Anstoßen an den Getriebeträger 5 verschoben worden und hat dabei über das Kugellager 91 das zweite Sonnenrad 37 mitgenommen.

In dem Druckraum 62 wird solange ein eine die Federkräfte überwiegende Druckkraft erzeugender Druck aufrechterhalten, solange die Kopplung von zweitem Sonnenrad 37 und Planetensteg 27 aufrechterhalten werden soll. Ist eine Entkopplung gewünscht, so wird der Druckraum 62 von Druck entlastet, so dass die Schraubendruckfedern 93 über den Ringkolben 50 und das Kugellager 91 das zweite Sonnenrad 37 außer Eingriff mit dem Planetensteg 27 bringen.

### Bezugszeichenliste

- 5: Getriebeträger
- 6: Befestigungsflansch an 5
- 10: Planetengetriebestufe
- 11: weitere Getriebestufe
- 12: Hydromotor
- 13: Eingangswelle
- 14: Mitnehmerteil von 13
- 15: Sonnenradteil von 13
- 16: Außenverzahnung von 15
- 17: Innenverzahnung von 14
- 18: Sonnenrad
- 19: Wälzlager
- 25: Planetenrad
- 26: Lagerzapfen
- 27: Planetensteg
- 28: Hohlrad
- 29: Befestigungsflansch an 28
- 30: Kegelrollenlager
- 31: Deckel
- 34: Bohrung
- 35: Innenverzahnung von 27
- 36: Außenverzahnung von 37
- 37: zweites Sonnenrad
- 38: Bundbolzen
- 39: Bundbolzen
- 40: Wälzlager
- 41: Lagerzapfen an 5
- 42: Wälzlageranordnung
- 43: Stirnrad
- 44: Zahnwelle von 12
- 45: Zylinderstifte
- 46: Nut in 14
- 47: unverzahnter Endbereich von 37
- 48: Zwischenring
- 49: Gleitlager
- 50: hydraulischer Ringkolben
- 51: Dichtring
- 52: Abschnitt von 50
- 53: Dichtring
- 54: Innenschulter von 5
- 55: Druckraum
- 56: Rollenlager
- 57: Abschnitt von 50
- 60: Sprengring
- 61: Boden
- 62: Druckraum
- 63: Radialbohrung
- 64: Feder
- 65: Kugel
- 66: Ringnut
- 67: Ringnut
- 70: Kunststoffring
- 71: Axialbohrungen in 70
- 72: Schraubendruckfeder
- 76: Anlagescheibe
- 77: Sprengring
- 78: Stirnseite von 37
- 79: Schulter an 14
- 84: Anschlussbohrung
- 85: Schrägbohrung
- 86: Frässchlitz
- 90: Boden von 50
- 91: Kugellager
- 92: Schraubendruckfeder
- 93: Sackbohrung
- 94: Durchbrüche in 90

## Patentansprüche

1. Getriebe, das insbesondere innerhalb einer Einzelradantriebseinheit vorgesehen ist und das einen Getriebeträger (5), eine Eingangswelle (13), mindestens eine Planetengetriebestufe (10) mit einem ersten außenverzahnten Sonnenrad (18), das über die Eingangswelle (13) antreibbar ist, mit einem innenverzahnten Hohlrad (28), das auf dem Getriebeträger (5) drehbar gelagert ist, und mit einem drehbar gelagerten Planetensteg (27), an dem mindestens ein außenverzahntes, sowohl mit dem Sonnenrad (18) als auch mit dem Hohlrad (28) in Eingriff stehendes Planetenrad (25) drehbar gelagert ist, und eine weitere Getriebestufe (11) aufweist, die mindestens ein Stirnrad (43) umfasst, das auf einem bezüglich des Getriebeträgers (5) ortsfesten, mit seiner Achse im Abstand zur Achse der Eingangswelle (13) angeordneten Lagerzapfen (41) drehbar gelagert ist und mit dem Hohlrad (28) in Zahneingriff steht, und mit einem zweiten außenverzahnten Sonnenrad (37), **dadurch gekennzeichnet, dass** das zweite außenverzahnte Sonnenrad (37) in Richtung der Achse der Eingangswelle (13) zwischen einer ersten Position und einer zweiten Position axial verschiebbar ist und in der eine Kopplungsposition darstellenden, ersten Position sowohl mit dem mindestens einen Stirnrad (43) als auch über eine Verzahnung mit dem Planetensteg (27) in Eingriff steht und dass in der eine Entkopplungsposition darstellenden, zweiten axialen Position des zweiten Sonnenrads (37) der Kraftfluss zwischen dem mindestens einen Stirnrad (43) und dem Planetensteg (27) unterbrochen ist.

2. Getriebe nach Patentanspruch 1, **dadurch gekennzeichnet, dass** das zweite Sonnenrad (37) in seiner Entkopplungsposition außer Zahneingriff mit dem Planetensteg (27) ist.

3. Getriebe nach Patentanspruch 1 oder 2, **dadurch gekennzeichnet, dass** ein Fluidkolben (50), insbesondere ein hydraulischer Fluidkolben vorhanden ist, mit dem das zweite Sonnenrad (37) axial bewegbar ist.

4. Getriebe nach Patentanspruch 3, **dadurch gekennzeichnet, dass** der Fluidkolben (50) doppeltwirkend ausgebildet ist und an zwei Druckräume (55, 62) angrenzt, wobei der Fluidkolben (50) und das zweite Sonnenrad (37) durch Zufuhr von Druckmittel in den einen Druckraum (62) in die eine Richtung in die Kopplungsposition und durch Zufuhr von Druckmittel in den anderen Druckraum (55) in die entgegengesetzte Richtung in die Entkopplungsposition bewegbar sind.

5. Getriebe nach Patentanspruch 4, **dadurch gekennzeichnet, dass** der Fluidkolben (50) in den beiden axialen Positionen relativ zum Getriebeträger (5) arretierbar, insbesondere verrastbar ist.

6. Getriebe nach Patentanspruch 3, **dadurch gekennzeichnet, dass** der Fluidkolben (50) einfachwirkend ausgebildet ist und an einen Druckraum (55) angrenzt, wobei der Fluidkolben (50) und das zweite Sonnenrad (37) durch Zufuhr von Druckmittel in den Druckraum (55) in die eine Richtung in die eine axiale Position und durch eine Federanordnung in die entgegengesetzte Richtung in die andere axiale Position bewegbar sind.

7. Getriebe nach Patentanspruch 6, **dadurch gekennzeichnet, dass** der Fluidkolben (50) und das zweite Sonnenrad (37) durch eine Federanordnung in axiale Positionen bewegbar sind, in denen ein Kraftfluss zwischen dem mindestens einen Stirnrad (43) und dem Planetensteg (27) unterbrochen ist.

8. Getriebe nach Patentanspruch 7, **dadurch gekennzeichnet, dass** die Federanordnung mindestens eine Schraubendruckfeder (92) umfasst, die sich direkt am Fluidkolben und am Getriebeträger abstützt.

9. Getriebe nach Patentanspruch 7 oder 8, **dadurch gekennzeichnet, dass** die Federanordnung mindestens eine Schraubendruckfeder (92) umfasst, dass im Getriebeträger (5) im Bereich eines Lagerzapfens (41) eine Sackbohrung (93) vorhanden ist, die bis in den Lagerzapfen (41) hineinreicht, und dass die Schraubendruckfeder in die Sackbohrung eintaucht.

10. Getriebe nach einem der Patentansprüche 3 bis 9, **dadurch gekennzeichnet, dass** ein Druckraum (55, 62), durch dessen Druckbeaufschlagung der Fluidkolben (50) bewegbar ist, zwischen dem Fluidkolben (50) und dem Getriebeträger (5) ausgebildet ist.

11. Getriebe nach einem vorhergehenden Patentanspruch, **dadurch gekennzeichnet, dass** das zweite Sonnenrad (37) axial fest mit dem Fluidkolben (50) verbunden ist und das zweite Sonnenrad (37) und der Fluidkolben (50) drehbar aneinander gelagert sind.

12. Getriebe nach einem vorhergehenden Patentanspruch, **dadurch gekennzeichnet, dass** zur Entkopplung der Planetenräder (25) der mindestens einen Planetengetriebestufe (10) von einem Antrieb (12) die Eingangswelle (13) axial verschiebbar ist.

13. Getriebe nach Patentanspruch 12, **dadurch gekennzeichnet, dass** das zweite Sonnenrad (37) axial fest mit der Eingangswelle (13) gekoppelt ist und über die axial verschiebbare Eingangswelle (13) axial verschiebbar ist.

14. Getriebe nach Patentanspruch 13, **dadurch gekennzeichnet, dass** das zweite Sonnenrad (37) und die Eingangswelle (13) durch eine Anlage einer Stirnseite (78) des zweiten Sonnenrads (37) an einer äußeren Schulter (79) der Eingangswelle (13) und mit Hilfe eines an der Eingangswelle (13) angebrachten Sprengrings (77) und einer Schulter am zweiten Sonnenrad (37) axial fest miteinander verbunden sind.

15. Getriebe nach einem der Patentansprüche 12 bis 14 und einem der Patentansprüche 3 bis 10, **dadurch gekennzeichnet, dass** die Eingangswelle (13) oder ein Teil (14) von dieser axial fest mit dem Fluidkolben (50) verbunden und die Eingangswelle (13) oder der Teil (14) von dieser und der Fluidkolben (50) drehbar aneinander gelagert sind und dass ein Kraftfluss für eine axiale Verschiebung von der Eingangswelle (13) oder dem Teil (14) von dieser zum zweiten Sonnenrad (37) verläuft.

16. Getriebe nach einem Patentansprüche 13 bis 15, **dadurch gekennzeichnet, dass** die Eingangswelle (13) mehrteilig ausgebildet ist und ein mit dem Sonnenrad (18) der mindestens einen Planetengetriebestufe (10) fest verbundenes Sonnenradteil (15) und ein Mitnehmerteil (14) umfasst, dass das Mitnehmerteil (14) zwischen einer Kopplungsposition, in der es mit dem Sonnenradteil (15) gekoppelt ist, und einer Entkopplungsposition, in der es vom Sonnenradteil (15) entkoppelt ist, axial verschiebbar ist und dass das Mitnehmerteil (14) und das zweite Sonnenrad (37) axial fest miteinander verbunden sind.

## Claims

1. Transmission which is provided, in particular, inside a single wheel drive unit and which has a transmission mounting (5), an input shaft (13), at least one planetary gear stage (10) with a first externally toothed sun gear (18) which can be driven via the input shaft (13), with an internally toothed internal gear (28) which is mounted rotatably on the transmission mounting (5), and with a rotatably mounted planet spider (27), on which at least one externally toothed planetary gear (25) which is in engagement both with the sun gear (18) and with the internal gear (28) is mounted rotatably, and a further gear stage (11) which comprises at least one spur gear (43) which is mounted rotatably on a bearing journal (41) which is stationary with regard to the transmission mounting (5) and is arranged with its axis at a spacing from the axis of the input shaft (13), and is in tooth engagement with the internal gear (28), and with a second externally toothed sun gear (37), **characterized in that** the second externally toothed sun gear (37) can be displaced axially in the direction of the axis of the input shaft (13) between a first position and a second position, and, in the first position which represents a coupled position, is in engagement both with the at least one spur gear (43) and via a toothing system with the planet spider (27), and **in that**, in the second axial position of the second sun gear (37), which second axial position represents a decoupled position, the power flow between the at least one spur gear (43) and the planet spider (27) is interrupted.

2. Transmission according to Patent Claim 1, **characterized in that**, in its decoupled position, the second sun gear (37) is out of tooth engagement with the planet spider (27).

3. Transmission according to Patent Claim 1 or 2, **characterized in that** there is a fluid piston (50), in particular a hydraulic fluid piston, by way of which the second sun gear (37) can be moved axially.

4. Transmission according to Patent Claim 3, **characterized in that** the fluid piston (50) is of double-acting configuration and adjoins two pressure spaces (55, 62), it being possible for the fluid piston (50) and the second sun gear (37) to be moved in the one direction into the coupled position by way of feeding of pressure medium into the one pressure space (62) and in the opposite direction into the decoupled position by way of feeding of pressure medium into the other pressure space (55) .

5. Transmission according to Patent Claim 4, **characterized in that** the fluid piston (50) can be locked, in particular can be latched, in the two axial positions relative to the transmission mounting (5).

6. Transmission according to Patent Claim 3, **characterized in that** the fluid piston (50) is of single-acting configuration and adjoins one pressure space (55), it being possible for the fluid piston (50) and the second sun gear (37) to be moved in the one direction into the one axial position by way of feeding of pressure medium into the pressure space (55) and in the opposite direction into the other axial position by way of a spring arrangement.

7. Transmission according to Patent Claim 6, **characterized in that** the fluid piston (50) and the second sun gear (37) can be moved by way of a spring arrangement into axial positions, in which a power flow between the at least one spur gear (43) and the planet spider (27) is interrupted.

8. Transmission according to Patent Claim 7, **characterized in that** the spring arrangement comprises at least one compression coil spring (92) which is supported directly on the fluid piston and on the transmission mounting.

9. Transmission according to Patent Claim 7 or 8, **characterized in that** the spring arrangement comprises at least one compression coil spring (92), **in that** there is a blind bore (93) in the transmission mounting (5) in the region of a bearing journal (41), which blind bore (93) reaches as far as into the bearing journal (41), and **in that** the compression coil spring dips into the blind bore.

10. Transmission according to one of Patent Claims 3 to 9, **characterized in that** a pressure space (55, 62), by way of the pressurizing of which the fluid piston (50) can be moved, is configured between the fluid piston (50) and the transmission mounting (5).

11. Transmission according to a preceding patent claim, **characterized in that** the second sun gear (37) is connected in an axially fixed manner to the fluid piston (50), and the second sun gear (37) and the fluid piston (50) are mounted rotatably on one another.

12. Transmission according to a preceding patent claim, **characterized in that** the input shaft (13) can be displaced axially in order to decouple the planetary gears (25) of the at least one planetary gear stage (10) from a drive (12).

13. Transmission according to Patent Claim 12, **characterized in that** the second sun gear (37) is coupled in an axially fixed manner to the input shaft (13), and can be displaced axially via the axially displaceable input shaft (13).

14. Transmission according to Patent Claim 13, **characterized in that** the second sun gear (37) and the input shaft (13) are connected in an axially fixed manner to one another by way of an end side (78) of the second sun gear (37) bearing against an outer shoulder (79) of the input shaft (13) and with the aid of a circlip (77) which is attached to the input shaft (13) and of a shoulder on the second sun gear (37).

15. Transmission according to one of Patent Claims 12 to 14 and one of Patent Claims 3 to 10, **characterized in that** the input shaft (13) or a part (14) thereof is connected to the fluid piston (50) in an axially fixed manner, and the input shaft (13) or the part (14) thereof and the fluid piston (50) are mounted rotatably on one another, and **in that** a power flow for an axial displacement runs from the input shaft (13) or the part (14) thereof to the second sun gear (37).

16. Transmission according to one of Patent Claims 13 to 15, **characterized in that** the input shaft (13) is configured in multiple pieces and comprises a driver part (14) and a sun gear part (15) which is connected fixedly to the sun gear (18) of the at least one planetary gear stage (10), **in that** the driver part (14) can be displaced axially between a coupled position, in which it is coupled to the sun gear part (15), and a decoupled position, in which it is decoupled from the sun gear part (15), and **in that** the driver part (14) and the second sun gear (37) are connected to one another in an axially fixed manner.

## Revendications

1. Engrenage, qui est prévu en particulier à l'intérieur d'une unité d'entraînement de roue individuelle et qui comprend un support d'engrenage (5), un arbre d'entrée (13), au moins un étage d'engrenage planétaire (10) comportant un premier pignon planétaire (18) à denture extérieure qui peut être entraîné par le biais de l'arbre d'entrée (13), une couronne (28) à denture intérieure qui est montée rotative sur le support d'engrenage (5), et un porte-satellites (27) monté rotatif, sur lequel est monté rotatif au moins un satellite (25) à denture extérieure s'engrenant à la fois avec le pignon planétaire (18) et avec la couronne (28), et un autre étage d'engrenage (11) qui comporte au moins un pignon droit (43) qui est monté rotatif sur un tourillon de palier (41) fixe par rapport au support d'engrenage (5) et dont l'axe est disposé à distance de l'axe de l'arbre d'entrée (13) et qui s'engrène avec la couronne (28), et un deuxième pignon planétaire (37) à denture extérieure, **caractérisé en ce que** le deuxième pignon planétaire (37) à denture extérieure est déplaçable axialement dans la direction de l'axe de l'arbre d'entrée (13) entre une première position et une deuxième position et, dans la première position représentant une position d'accouplement, s'engrène à la fois avec ledit au moins un pignon droit (43) et avec le porte-satellites (27) par le biais d'une denture, et **en ce que** dans la deuxième position axiale, représentant une position de désaccouplement, du deuxième pignon planétaire (37), le flux de force entre ledit au moins un pignon droit (43) et le porte-satellites (27) est interrompu.

2. Engrenage selon la revendication 1, **caractérisé en ce que** le deuxième pignon planétaire (37) ne s'engrène pas avec le porte-satellites (27) dans sa position de désaccouplement.

3. Engrenage selon la revendication 1 ou 2, **caractérisé en ce qu'**un piston à fluide (50), en particulier un piston à fluide hydraulique est présent, à l'aide duquel le deuxième pignon planétaire (37) est déplaçable axialement.

4. Engrenage selon la revendication 3, **caractérisé en ce que** le piston à fluide (50) est à double action et est adjacent à deux chambres de pression (55, 62), le piston à fluide (50) et le deuxième pignon planétaire (37) étant déplaçables dans l'un des sens dans la position d'accouplement par apport de fluide sous pression dans l'une des chambres de pression (62) et étant déplaçables dans le sens opposé dans la position de désaccouplement par apport de fluide sous pression dans l'autre chambre de pression (55).

5. Engrenage selon la revendication 4, **caractérisé en ce que** le piston à fluide (50) peut être bloqué, en particulier peut être encliqueté, par rapport au support d'engrenage (5) dans les deux positions axiales.

6. Engrenage selon la revendication 3, **caractérisé en ce que** le piston à fluide (50) est à action simple et est adjacent à une chambre de pression (55), le piston à fluide (50) et le deuxième pignon planétaire (37) étant déplaçables dans l'un des sens dans l'une des positions axiales par apport de fluide sous pression dans la chambre de pression (55) et déplaçables en sens inverse dans l'autre position axiale au moyen d'un ensemble de ressorts.

7. Engrenage selon la revendication 6, **caractérisé en ce que** le piston à fluide (50) et le deuxième pignon planétaire (37) sont déplaçables dans des positions axiales au moyen d'un ensemble de ressorts, positions dans lesquelles un flux de force entre ledit au moins un pignon droit (43) et le porte-satellites (27) est interrompu.

8. Engrenage selon la revendication 7, **caractérisé en ce que** l'ensemble de ressorts comporte au moins un ressort de compression hélicoïdal (92) qui s'appuie directement contre le piston à fluide et contre le support d'engrenage.

9. Engrenage selon la revendication 7 ou 8, **caractérisé en ce que** l'ensemble de ressorts comporte au moins un ressort de compression hélicoïdal (92), **en ce qu'**un alésage borgne (93) est présent dans le support d'engrenage (5) dans la région d'un tourillon de palier (41), lequel alésage s'étend jusque dans le tourillon de palier (41), et **en ce que** le ressort de compression hélicoïdal pénètre dans l'alésage borgne.

10. Engrenage selon l'une des revendications 3 à 9, **caractérisé en ce qu'**une chambre de pression (55, 62), grâce à l'application de pression de laquelle le piston à fluide (50) est déplaçable, est formée entre le piston à fluide (50) et le support d'engrenage (5).

11. Engrenage selon l'une des revendications précédentes, **caractérisé en ce que** le deuxième pignon planétaire (37) est relié solidement axialement au piston à fluide (50) et le deuxième pignon planétaire (37) et le piston à fluide (50) sont montés l'un contre l'autre de manière rotative.

12. Engrenage selon l'une des revendications précédentes, **caractérisé en ce que** pour le désaccouplement des satellites (25) dudit au moins un étage d'engrenage planétaire (10) d'un entraînement (12), l'arbre d'entrée (13) est déplaçable axialement.

13. Engrenage selon la revendication 12, **caractérisé en ce que** le deuxième pignon planétaire (37) est accouplé solidement axialement à l'arbre d'entrée (13) et est déplaçable axialement par le biais de l'arbre d'entrée (13) axialement déplaçable.

14. Engrenage selon la revendication 13, **caractérisé en ce que** le deuxième pignon planétaire (37) et l'arbre d'entrée (13) sont reliés fixement l'un à l'autre axialement par un appui d'un côté frontal (78) du deuxième pignon planétaire (37) contre un épaulement extérieur (79) de l'arbre d'entrée (13) et à l'aide d'un jonc (77) monté sur l'arbre d'entrée (13) et d'un épaulement sur le deuxième pignon planétaire (37).

15. Engrenage selon l'une des revendications 12 à 14 et l'une des revendications 3 à 10, **caractérisé en ce que** l'arbre d'entrée (13) ou une partie (14) de celui-ci est relié(e) solidement axialement au piston à fluide (50) et l'arbre d'entrée (13) ou une partie (14) de celui-ci et le piston à fluide (50) sont montés l'un contre l'autre de manière rotative, et **en ce qu'**un flux de force pour un déplacement axial s'étend de l'arbre d'entrée (13) ou de la partie (14) de celui-ci jusqu'au deuxième pignon planétaire (37).

16. Engrenage selon l'une des revendications 13 à 15, **caractérisé en ce que** l'arbre d'entrée (13) est réalisé en plusieurs parties et comporte une partie de pignon planétaire (15) reliée solidement au pignon planétaire (18) dudit au moins un étage d'engrenage planétaire (10) et une partie d'entraînement (14), **en ce que** la partie d'entraînement (14) est déplaçable axialement entre une position d'accouplement dans laquelle elle est accouplée à la partie de pignon planétaire (15) et une position de désaccouplement dans laquelle elle est désaccouplée de la partie de pignon planétaire (15), et **en ce que** la partie d'entraînement (14) et le deuxième pignon planétaire (37) sont reliés fixement l'un à l'autre axialement.
